# EUROPEAN PATENT APPLICATION

(11) **EP 4 455 388 A1**
(43) Date of publication of application: **30.10.2024**
(21) Application number: 23737393.1
(22) Date of filing: 05.01.2023
(51) Int. Cl.: D06F 34/05, D06F 34/14, D06F 34/30, D06F 34/32, D06F 34/34, D06F 31/00

(54) **CLOTHING TREATING APPARATUS**

(30) Priority: 05.01.2022 KR 20220001407
(71) Applicant: LG Electronics Inc., Yeongdeungpo-gu Seoul 07336 (KR)
(72) Inventor: HWANG, Jeongwon, Seoul 08592 (KR); JEONG, Deokjoon, Seoul 08592 (KR); KIM, Dongjin, Seoul 08592 (KR)
(74) Representative: Vossius & Partner Patentanwälte Rechtsanwälte mbB
(86) International application number: PCT/KR2023/000196
(87) International publication number: WO 2023/132645

(57) **Abstract**

A clothing treating apparatus is disclosed, and the clothing treating apparatus according to one embodiment of the present invention comprises a cabinet, and a drum which is rotatably provided inside the cabinet and accommodates clothing therein, wherein the cabinet has any one of a signal generator and a signal detector, and the other one is provided on an external device positioned outside the cabinet, and becomes paired with the external device, while the signal detector has detected a signal of the signal generator.

## Description

### [Technical Field]

The present disclosure relates to a laundry treating apparatus, and more particularly, relates to a laundry treating apparatus for treating laundry.

### [Background]

A laundry treating apparatus is an apparatus that may perform various treatment courses to treat laundry, such as a washing course that puts clothes, bedding, and the like (hereinafter, referred to as laundry) into a drum and removes contaminants from the laundry, a drying course to remove moisture present in the laundry, and the like.

The laundry treating apparatus may include a cabinet that forms an outer appearance thereof, and may include the drum disposed inside the cabinet to accommodate the laundry therein. Additionally, when water is used in the treatment course of the laundry, a tub may be disposed inside the cabinet, and the drum may be installed inside the tub.

The laundry treating apparatuses may be categorized into a top loading type and a front loading type based on a scheme of putting the laundry into the drum. The top loading type may put the laundry via a top surface of the cabinet, and the front loading type may put the laundry via a front surface of the cabinet.

Referring to Korean Patent Application Publication No. 10-2020-0014029, a system emerged in which one laundry treating apparatus and a further laundry treating apparatus are respectively equipped with communication modules and are able to be in communication with each other.

As a result, one of the separate laundry treating apparatuses was able to receive information, a state, or the like of a treatment course performed by the further treating apparatus and perform a treatment course of the laundry appropriate thereto.

In the operation scheme via information exchange between a plurality of devices as such, securing communication reliability or stability for the information exchange between the plurality of devices may be an important issue.

For example, when the plurality of devices barely meet a required distance for communication or when a performance of communication equipment fluctuates intermittently because of various reasons, the reliability and the stability of the communication between the plurality of devices are not secured, so that safety and convenience in use of the device may be greatly reduced.

In other words, even when the plurality of devices for treating the laundry are permitted to be in communication with each other, developing a technology to ensure the stability and the reliability of the mutual communication to improve the safety and the convenience in operating the plurality of devices is an important task in the present technical field.

### [Summary]

### [Technical Problem]

Embodiments of the present disclosure are to provide a laundry treating apparatus that may ensure stable communication with an external device.

Additionally, embodiments of the present disclosure are to provide a laundry treating apparatus that may effectively secure communication stability via efficient arrangement with an external device.

Additionally, embodiments of the present disclosure are to provide a laundry treating apparatus that may effectively check stability of a state of being paired with an external device.

Additionally, embodiments of the present disclosure are to provide a laundry treating apparatus that may effectively improve convenience of use of a plurality of devices via efficient arrangement with an external device.

### [Technical Solutions]

A laundry treating apparatus according to an embodiment of the present disclosure may include a cabinet and a drum. Laundry may be accommodated inside the drum, and the laundry accommodated inside the drum may be treated via various treatment courses inside the cabinet.

The laundry treating apparatus may be permitted to be in communication with an external device that is located outside the cabinet and is for treating the laundry separately from the laundry treating apparatus. Accordingly, the laundry treating apparatus according to an embodiment of the present disclosure may activate a pairing mode in which the laundry may be treated while exchanging state information, laundry treatment information, and the like with the external device.

In one example, an embodiment of the present disclosure may identify a state in which communication stability is secured via mutual signal transmission and reception with the external device. For example, one of a signal generator and a signal detector may be disposed on the cabinet and the other may be disposed on the external device, so that whether a signal from the signal generator meets minimum distance conditions or arrangement conditions to be detected by the signal detector may be effectively identified.

Such laundry treating apparatus according to an embodiment of the present disclosure includes a cabinet and a drum. The drum may be rotatably disposed inside the cabinet and may accommodate laundry therein.

One of a signal generator and a signal detector may be disposed on the cabinet, and the other may be disposed on an external device located outside the cabinet, and the laundry treating apparatus may be paired with the external device when the signal detector detects a signal from the signal generator.

The signal detector may detect the signal when located within a predetermined distance from the signal generator. The signal detector may detect the signal while directly facing the signal generator.

The one of the signal generator and the signal detector may be disposed on one surface of the cabinet, the other of the signal generator and the signal detector may be disposed on one surface of the external device, and when the one surface of the cabinet is disposed to face the one surface of the external device, the signal detector may detect the signal from the signal generator.

The one of the signal generator and the signal detector may be disposed on a top surface or a bottom surface of the cabinet, and when the cabinet and the external device are stacked vertically, the signal detector may detect the signal.

The signal detector may detect the signal while being aligned vertically with the signal generator.

The one of the signal generator and the signal detector may be disposed on one side of the top surface or the bottom surface of the cabinet, and a signal transmission distance of the signal generator may be equal to or smaller than a half of a length of the one side.

The external device may include a drum that accommodates laundry therein to perform an external treatment course of the laundry. The signal generator may generate a magnetic field as the signal.

The signal detector may include a reed switch that switches to a short circuit state in response to the signal.

An embodiment of the present disclosure may further include a controller that is disposed inside the cabinet and adjusts rotation of the drum to perform a treatment course of the laundry, and the controller may be permitted to be paired with a further controller disposed in the external device when the signal detector detects the signal.

The signal detector may be disposed on the cabinet and transmit whether the signal has been detected to the controller, and the controller may notifie the further controller that a current state is a pairing permitted state when the signal detector detects the signal.

An embodiment of the present disclosure may further include an input device that is disposed in the cabinet and generates an input signal to be transmitted to the controller by a user, and an output device that is disposed in the cabinet and outputs information to be transmitted to the user.

When the input signal requesting pairing with the external device is received via the input device, the controller may perform the pairing with the further controller when a current state corresponds to a pairing permitted state.

The controller may perform the pairing via inter-device direct communication with the further controller. The controller may perform the paring by being in communication with the further controller in a Bluetooth scheme.

An embodiment of the present disclosure may include the input device and the output device, and when the input signal requesting the pairing with the external device is received from the input device, the controller may provide information guiding an installation location of the external device to the user via the output device when the signal is not detected by the signal detector.

### [Advantageous Effects]

The embodiments of the present disclosure may provide the laundry treating apparatus that may ensure the stable communication with the external device.

Additionally, the embodiments of the present disclosure may provide the laundry treating apparatus that may effectively secure the communication stability via the efficient arrangement with the external device.

Additionally, the embodiments of the present disclosure may provide the laundry treating apparatus that may effectively check the stability of the state of being paired with the external device.

Additionally, the embodiments of the present disclosure may provide the laundry treating apparatus that may effectively improve the convenience of use of the plurality of devices via the efficient arrangement with the external device.

### [Brief Description of the Drawings]

FIG. 1 is a perspective view showing a laundry treating apparatus according to an embodiment of the present disclosure.
FIG. 2 is a diagram showing a manipulation unit disposed on a laundry treating apparatus according to an embodiment of the present disclosure.
FIG. 3 is a cross-sectional view showing the interior of a laundry treating apparatus including a tub according to an embodiment of the present disclosure.
FIG. 4 is a cross-sectional view showing the interior of a laundry treating apparatus with a tub omitted according to an embodiment of the present disclosure.
FIG. 5 is a diagram schematically showing a communication relationship of a laundry treating apparatus according to an embodiment of the present disclosure.
FIG. 6 is a diagram showing a laundry treating apparatus and an external device arranged in parallel with each other according to an embodiment of the present disclosure.
FIG. 7 is a top view of a laundry treating apparatus and an external device in FIG. 6.
FIG. 8 is a diagram showing a laundry treating apparatus and an external device disposed in series with each other according to an embodiment of the present disclosure.
FIG. 9 is a side view of a laundry treating apparatus and an external device in FIG. 8.
FIG. 10 is an exploded view of a joint portion of a laundry treating apparatus and an external device in FIG. 8.
FIG. 11 is a diagram showing a signal generator and a signal detector disposed in a laundry treating apparatus and an external device in FIG. 8.
FIG. 12 is a diagram showing a screen output from an output device when a laundry treating apparatus according to an embodiment of the present disclosure activates a pairing mode.
FIG. 13 is a diagram showing a screen output from an output device when a laundry treating apparatus according to an embodiment of the present disclosure fails to activate a pairing mode.

### [Best Mode]

Hereinafter, with reference to the attached drawings, embodiments of the present disclosure will be described in detail such that those skilled in the art may easily practice them.

However, the present disclosure may be implemented in several different forms and may not be limited to the embodiments described herein. Further, to clearly illustrate the present disclosure in the drawings, parts unrelated to the description are omitted, and similar drawing numerals are assigned to similar parts throughout the present document.

In the present document, redundant descriptions of the same components are omitted.

Further, in the present document, when a component is referred to as being 'connected' to another component, it should be understood that the components may be directly connected to each other, but there may be another component therebetween. On the other hand, in the present document, when a component is referred to as being 'directly connected' to another component, it should be understood that there is no other component therebetween.

Additionally, the terms used herein are merely used to describe specific embodiments and are not intended to limit the present disclosure.

Further, as used herein, singular expressions may include plural expressions, unless the context clearly dictates otherwise.

In addition, in the present document, it should be understood that terms such as 'include' or 'have' are only intended to indicate the presence of features, numbers, steps, operations, components, parts, or combinations thereof described herein, and do not preclude the presence or addition of other features, numbers, steps, operations, components, parts, or combinations thereof.

Further, in the present document, the term 'and/or' includes a combination of a plurality of listed items or any of the plurality of listed items. As used herein, 'A or B' may include 'A', 'B', or 'both A and B'.

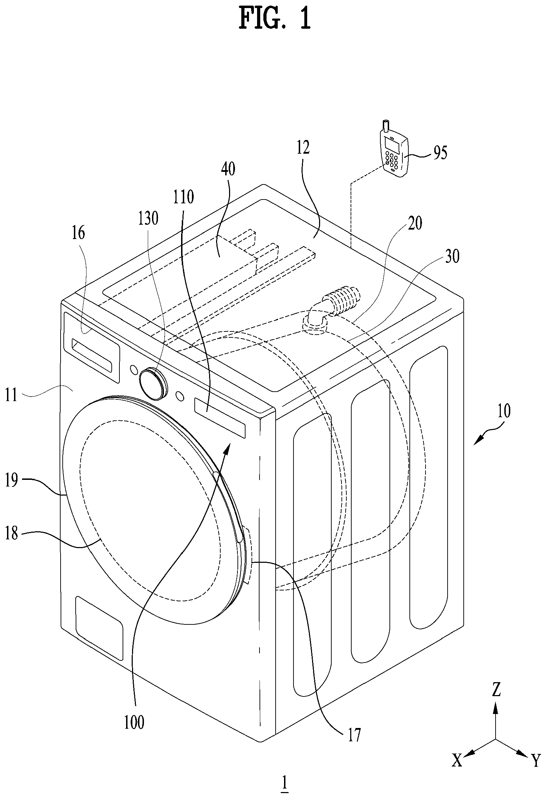

FIG. 1 shows a laundry treating apparatus 1 according to an embodiment of the present disclosure. Referring to FIG. 1, an embodiment of the present disclosure includes a cabinet 10. The cabinet 10 forms an outer appearance of the laundry treating apparatus 1, and defines a space in which a drum 30, which will be described later, or the like is accommodated therein.

The cabinet 10 may have various shapes as needed, such as a polygonal pillar or a circular pillar. When the cabinet 10 is formed in a rectangular parallelepiped shape as shown in FIG. 1, the cabinet 10 may be formed by coupling a plurality of panels to each other or by integrally molding and bending the plurality of panels.

When the cabinet 10 includes the plurality of panels, the plurality of panels may include a front panel 11, a rear panel, a top panel 12, a bottom panel 13, and a pair of side panels.

A laundry inlet 18 to allow laundry to be introduced into the cabinet 10 may be defined in the cabinet 10. The laundry inlet 18 may be defined in one surface of the cabinet 10 and may serve as an entrance for a user to insert the laundry into the cabinet 10.

The laundry inlet 18 may be defined in the front panel 11 or the top panel 12 of the cabinet 10. That is, in an embodiment of the present disclosure, the laundry inlet 18 may be defined in the front panel 11 and thus a front loading type may be employed, or the laundry inlet 18 may be defined in the top panel 12 and thus a top loading type may be employed.

FIG. 1 shows the front loading-type laundry treating apparatus 1 in which the laundry inlet 18 is defined in the front panel 11 of the cabinet 10, but the top loading-type may be employed when necessary.

The cabinet 10 may include a laundry door 19 for opening and closing the laundry inlet 18. The laundry door 19 may be disposed on the cabinet 10 in various ways to open and close the laundry inlet 18. FIG. 1 shows that the laundry door 19 is hinged to the cabinet 10 such that one side thereof is pivotable according to an embodiment of the present disclosure.

The laundry door 19 may be pivoted around a hinge to determine the opening and closing of the laundry inlet 18. For example, the laundry door 19 may open the laundry inlet 18 by pivoting around the hinge to be away from the cabinet 10, and close the laundry inlet 18 by pivoting around the hinge to come into close contact with the cabinet 10.

The cabinet 10 may include a door lock 17 for locking the laundry door 19. The door lock may secure the laundry door 19 such that the state in which the laundry door 19 closes the laundry inlet 18 is maintained.

An embodiment of the present disclosure may include a controller 90, and the controller 90 may be connected in a signal manner to the door lock 17 to control an operating state of the door lock 17, thereby controlling the closed state of the laundry door 19.

For example, the door lock 17 may be controlled by the controller 90 to secure the laundry door 19 in the locked state such the closed state of the laundry door 19 does not change to the open state. When the door lock 17 is unlocked, the laundry door 19 may be automatically pivoted to open the laundry inlet 18, or may be freely manipulated to the open state by the user.

The cabinet 10 may have a manipulation unit 100, and the manipulation unit 100 may include an input device 110 and an output device 130. FIG. 1 shows the manipulation unit 100 disposed at an upper side of the front panel 11, but a location, a shape, the number, and the like of the manipulation unit 100 may vary depending on need.

The manipulation unit 100 may be a means of exchanging signals or information between the user and the laundry treating apparatus 1, for example, the controller 90. A detailed description of the manipulation unit 100 will be made later.

FIG. 1 schematically shows a detergent supplier 40, the drum 30, a tub 20, and the like disposed inside the cabinet 10.

The tub 20 may be disposed inside the cabinet 10 and may accommodate water therein. The tub 20 may be constructed in the laundry treating apparatus 1 to use a large amount of water for treating the laundry, such as a washing course, a rinsing course, and the like.

In other words, when the laundry treating apparatus 1 according to an embodiment of the present disclosure is constructed to perform a treatment course of the laundry using washing water, such as the washing course, the tub 20 may be disposed inside the cabinet 10 and the drum 30 may be installed inside the tub 20.

However, when the laundry treating apparatus 1 is constructed to perform only a treatment course that does not require the use of washing water, such as a drying course to remove moisture from the laundry, unlike the washing course, the tub 20 may be omitted. In other words, the laundry treating apparatus 1 may not have the tub 20 but only have the drum 30.

The drum 30 may be disposed inside the cabinet 10 and may accommodate the laundry therein. That is, the laundry that is introduced into the cabinet 10 via the laundry inlet 18 may be accommodated inside the drum 30 and undergo various treatment courses. A detailed description of the tub 20 and the drum 30 will be made later.

An embodiment of the present disclosure may include the detergent supplier 40. The detergent supplier 40 may provide detergent, which is to create and enhance a washing effect in the washing course or the like to remove contaminants from the laundry, into the drum 30.

The laundry treating apparatus 1 according to an embodiment of the present disclosure may be in communication with a user's terminal 95. The user's terminal 95 may refer to a device through which the user may input or receive information while away from the laundry treating apparatus 1. For example, a mobile phone, a computer, and the like that the user may carry may correspond to the terminal 95.

An embodiment of the present disclosure may establish the communication with the terminal 95 via the controller 90, and the information may be transmitted and received. A detailed description of the communication with the terminal 95 or the like will be made later.

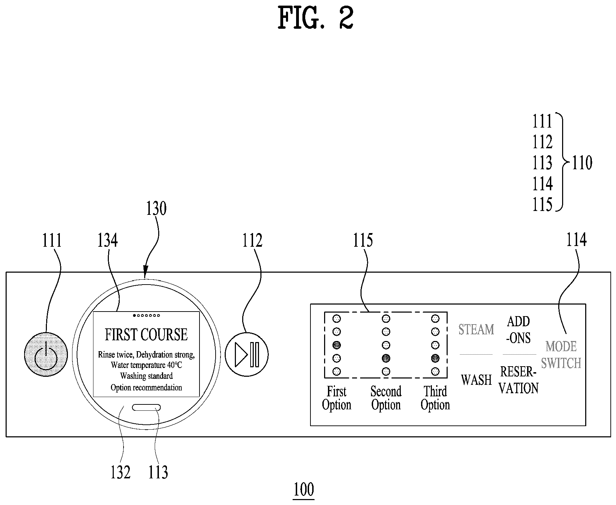

FIG. 2 shows the manipulation unit 100 according to an embodiment of the present disclosure. The manipulation unit 100 may include the input device 110 that generates an input signal when manipulated by the user, and the output device 130 that provides various information to the user in response to an output signal of the controller 90.

The manipulation unit 100 may include the input device 110 and/or the output device 130, and the input device 110 and the output device 130 may be located together or separated from each other. The input device 110 and the output device 130 may respectively include a plurality of input devices and a plurality of output devices, and may be disposed at various locations of the cabinet 10.

FIG. 2 shows the manipulation unit 100 in which the input device 110 and the output device 130 are disposed together and constructed as one control panel according to an embodiment of the present disclosure. Referring to FIG. 2, the output device 130 may include a display 134 that outputs a screen to provide visual information to the user.

Specifically, the output device 130 may include a screen peripheral portion 132 that surrounds the display 134 and the display 134 located on the screen peripheral portion 132, and may be connected to the controller 90 and output the screen providing necessary information to the user via the display 134. Additionally, the output device 130 may further include a speaker for providing an auditory signal, such as various notification sounds, to the user.

The input device 110 may be manipulated by the user to generate various input signals. For example, the input device 110 may include components such as buttons that are physically manipulated by the user, touch-based components that generate signals by being in contact with a user's hand or the like, and microphones that receive a voice signal or the like from the user.

In the present disclosure, the buttons include a physical button that is manipulated by the user to generate a physical change, and a touch button that generates an electrical signal as the user's hand or the like comes into contact therewith. In other words, in the present disclosure, buttons may be formed with various types and shapes depending on need.

Referring to FIG. 2, the input device 110 may include a power button 111. When the power button 111 is pressed, power may be applied to various components disposed in the laundry treating apparatus 1.

The laundry treating apparatus 1 according to an embodiment of the present disclosure may be connected to an external power source and maintain a standby state or a sleep state in which power is not applied to remaining components except for some components, and then when the power button 111 is manipulated, may be switched to a power-on state or a wake-up state in which preparation to perform the treatment course of the laundry is made as the power is also applied to the remaining components.

An embodiment of the present disclosure may include a power standby unit that receives the power from the external power source at all times regardless of the standby state and the power-on state, and the power standby unit may allow the power application to other components such as the as controller 90 when the power button 111 is pressed in the sleep state.

In one example, the input device 110 may include a display button 113. The display button 113 may be disposed in the screen peripheral portion 132 of the output device 130 or may be disposed around the same. Additionally, the display button 113 may be replaced with a scheme of touching the display 134.

A command based on screen information output from the display 134 may be input via the display button 113. For example, the user may manipulate the display button 113 to select a specific area or one item of the screen output on the display 134.

Additionally, the input device 110 may include a movement button. The movement button may be disposed on or around the screen peripheral portion 132. The movement button may be replaced with a jog disposed on the screen peripheral portion 132 or the like and rotated, or may be replaced with the scheme of touching the display 134.

The user may change an object to be selected among a plurality of items on the screen output on the display 134 by manipulating the movement button.

The input device 110 may include a perform button 112. The perform button 112 may also be defined as a pause button. An embodiment of the present disclosure may perform the various treatment courses for treating the laundry accommodated inside the drum 30 via control of the controller 90 or the like. The user may manipulate the perform button 112 to perform or pause the treatment course.

In one example, the input device 110 may include a pairing control button 114. The laundry treating apparatus 1 according to an embodiment of the present disclosure may activate a pairing mode in which communication with another external device, such as an external device 2, is allowed to enable information exchange therebetween, and may activate a pairing control mode to directly control the external device 2 in the pairing mode.

In other words, when the pairing control mode is activated, the user may use the input device 110 or the like disposed on the cabinet 10 according to an embodiment of the present disclosure to control operation of the external device 2 paired with the laundry treating apparatus 1 according to an embodiment of the present disclosure.

In other words, in an embodiment of the present disclosure, the controller 90 may activate the pairing mode in which it is allowed to be in communication with the external device 2 located outside the cabinet 10 to exchange information therewith. The controller 90 may activate the pairing mode while being in communication with a further controller 3 of the external device 2.

In the pairing mode, when the user presses the pairing control button 114 of the input device 110, the controller 90 may activate the pairing control mode of directly transmitting a command to the further controller 3 of the external device 2 via the input device 110. In one example, the controller 90 may also be subjected to pairing control by the further controller 3 of the external device 2.

In one example, the input device 110 may include an option setting unit 115. In an embodiment of the present disclosure, the user may adjust setting values for a plurality of options by manipulating the option setting unit 115.

Specifically, in an embodiment of the present disclosure, the controller 90 may be in a state in which the various treatment courses for treating the laundry are preset.

For example, the plurality of treatment courses may include the washing course to remove the contaminants from the laundry, the rinsing course to rinse the laundry, a dehydration course to remove moisture from the laundry via a physical scheme such as a centrifugal force, the drying course to remove moisture from the laundry via a phase change such as evaporation of water.

In one example, each of the plurality of treatment courses may include a plurality of adjustable options. Each of the plurality of options may have a plurality of option values that the user may select, and one of the plurality of option values may be applied as a setting value for the corresponding option.

The user may manipulate the option setting unit 115 to change setting values of options for which change of the setting value is permitted. That is, each option may be set to have an initial setting value before being changed by the user, and the user may change a setting value of a specific option from the initial setting value to another option value via the option setting unit 115.

The option setting unit 115 may include a plurality of buttons for changing each option, and may be controlled by the controller 90 such that manipulation is permitted for options that may be changed by the user in a currently selected treatment course, and signal generation is inhibited for options that the user is not able to change.

For example, the controller 90 may reflect the change in the option that may be changed by the user for the currently selected treatment course, but may ignore the corresponding command when the change of the option that the user is not able to change is input.

The input device 110 according to an embodiment of the present disclosure may include various buttons for use convenience of the user in addition to the plurality of buttons mentioned above.

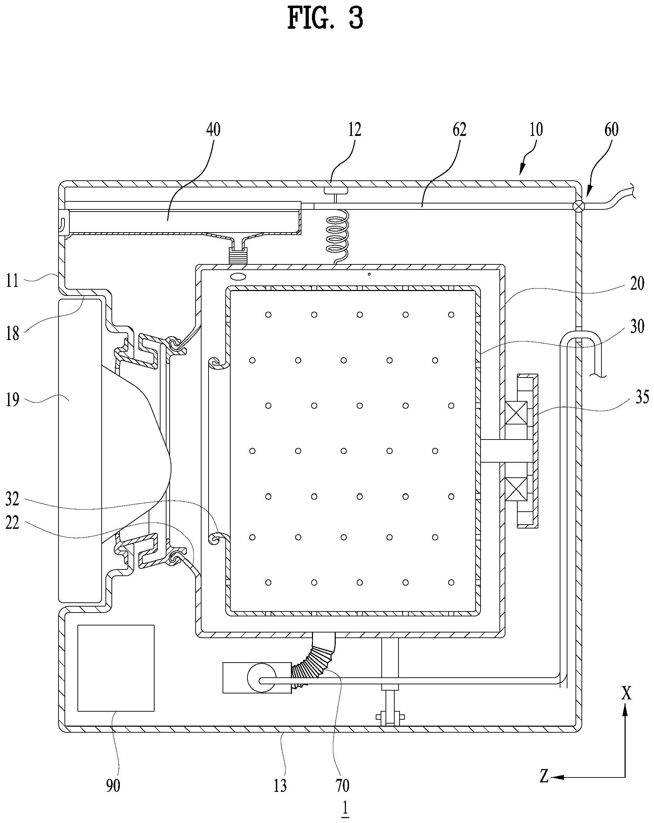

FIG. 3 shows the laundry treating apparatus 1 including the tub 20 and the detergent supplier 40 in an embodiment of the present disclosure.

Referring to FIG. 3, when the washing course of the like of the laundry is performed in the laundry treating apparatus 1 according to an embodiment of the present disclosure, the laundry treating apparatus 1 may include the tub 20, the detergent supplier 40, and the like.

Referring to FIG. 3, the tub 20 may be disposed inside the cabinet 10, may define an internal space therein to accommodate water, and may have various shapes. A tub inlet 22 facing the laundry inlet 18 of the cabinet 10 may be defined in one surface of the tub 20.

For example, the tub 20 may have a cylindrical shape with the space defined therein, and the tub inlet 22 may be defined in a front surface of the tub 20 facing the laundry inlet 18. The laundry input via the laundry inlet 18 may be put into the tub 20 via the tub inlet 22.

The drum 30 may be disposed inside the tub 20. The drum 30 may have various shapes with a space defined therein. The drum 30 may be rotatable by a driver 35.

The driver 35 may be disposed outside the tub 20, and the drum 30 may have a rotation shaft connected to a rear surface thereof. The driver 35 may be directly connected to the rotation shaft or indirectly connected thereto via a belt or the like.

The drum 30 may be rotatably disposed inside the tub 20, and may have a drum inlet 32 facing the tub inlet 22 in one surface thereof. That is, the inside of the drum 30 may be in communication with the outside via the drum inlet 32, the tub inlet 22, and the laundry inlet 18.

Accordingly, the laundry input by the user via the laundry inlet 18 may be accommodated inside the drum 30 after passing through the laundry inlet 18, the tub inlet 22, and the drum inlet 32. The laundry inlet 18, the tub inlet 22, and the drum inlet 32 may be aligned in a direction parallel to the rotation shaft of the drum 30.

The drum 30 may have a circular cross-section to facilitate rotation around the rotation shaft. For example, the drum 30 may be formed in a cylindrical shape. Additionally, a plurality of through-holes may be defined in a circumferential surface of the drum 30.

The drum 30 installed inside the tub 20 that accommodates water therein may allow water inside the tub 20 to flow into the drum 30 via the through-holes, thereby providing water to the laundry.

An embodiment of the present disclosure may include a water supplier 60. The water supplier 60 may be connected to an external water source disposed outside the cabinet 10, such as an urban water source, and supply water into the cabinet 10.

The water supplier 60 may include a water supply valve to regulate a flow of water, and water introduced from outside the cabinet 10 may flow along a water supply pipe 62 and be directly supplied into the tub 20 or may be supplied to the detergent supplier 40.

The detergent supplier 40 may store detergent therein, and may supply the detergent into the tub 20 or the drum 30. When the water supply pipe 62 is connected to the detergent supplier 40, the detergent supplier 40 may supply water supplied via the water supply pipe 62 and the detergent together into the tub 20.

An embodiment of the present disclosure may include a drainage 70. The controller 90 may perform a drain process by controlling the drainage 70 to discharge water inside the tub 20 to the outside during the washing course or the like.

The drainage 70 may include a drain pipe that is connected to the tub 20 and is for allowing water inside the tub 20 to flow to the outside, may include a drain valve for regulating a flow of water in the drain pipe, and may include a drain pump to generate the flow of water in the drain pipe.

An embodiment of the present disclosure may include the controller 90. The controller 90 may be connected in a signal manner to the various components that consume the power and may control the operation of the respective components. The controller 90 may be divided into a plurality of pieces or include various sub-divided components as needed.

For example, the controller 90 may functionally include a communication unit for communication with the outside or other components, storage for storing information, and an operation unit for information processing. Additionally, the controller 90 may include a sub-controller 90 equipped for each component, and a main controller 90 that is connected in a signal manner to the sub-controller 90 and is responsible for controlling the sub-controller 90.

At least some of the sub-divided components of the controller 90, which are differentiated by function or configuration as described above, may be spatially and functionally integrated with each other as needed. Additionally, at least some of the sub-divided components may be disposed to be spatially separated from each other.

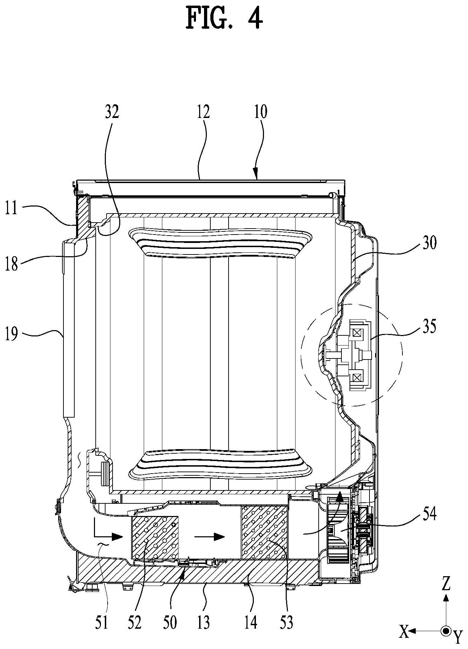

FIG. 4 shows a form in which the tub 20 and the detergent supplier 40 are omitted and the drying course of the laundry is able to be performed according to an embodiment of the present disclosure.

Referring to FIG. 4, in the form in which the tub 20 is omitted, the drum 30 may be rotatably disposed inside the cabinet 10. The driver 35 may be located in one side of the cabinet 10 and may be connected to the drum 30 itself or the rotation shaft of the drum 30 to provide the rotational force to the drum 30.

In one example, a heater 50 to provide high-temperature air to the laundry inside the drum 30 may be disposed inside the cabinet 10. The heater 50 may be installed on a base 14 that is located on the bottom panel 13 and disposed inside the cabinet 10.

FIG. 4 shows the heater 50 disposed outside the drum 30 to provide dehumidified and heated air, and into which air that has passed through the inside of the drum 30 is re-introduced.

Referring to FIG. 4, the heater 50 may include an air passage 51 in communication with the inside of the drum 30. Air containing water vapor generated by evaporation of moisture present in the laundry may exist inside the drum 30, and air inside the drum 30 may be discharged from the drum 30 and flow into the air passage 51. For example, air discharged from the inside of the drum 30 to the outside of the drum 30 via the drum inlet 32 may flow into the air passage 51 and flow along the air passage 51.

In one example, the heater 50 may include a dehumidifying unit 52. The dehumidifying unit 52 may come into contact with air flowing along the air passage 51 to condense water vapor in air and remove water vapor from air. Accordingly, air flowing along the air passage 51 may be dehumidified such that water vapor is greatly reduced as it passes through the dehumidifying unit 52.

The heater 50 may include a temperature increasing unit 53. The temperature increasing unit 53 may be in direct contact with air flowing along the air passage 51 or may be in thermal contact with air to heat air. Air flowing along the air passage 51 may be dried at a high temperature while passing through the dehumidifying unit 52 and the temperature increasing unit 53.

The heater 50 may include a fluid system forming the dehumidifying unit 52 and the temperature increasing unit 53. The fluid system may include a compressor, a condenser, a diffusion valve, and an expander, the dehumidifying unit 52 may correspond to the expander, and the temperature increasing unit 53 may correspond to the condenser.

However, in an embodiment of the present disclosure, the heater 50 is not limited to including the fluid system, and the dehumidifying unit 52 and the temperature increasing unit 53 may be in various schemes.

The heater 50 may include an air fan 54. The air fan 54 may be located in a space in communication with the air passage 51, for example, on the air passage 51 to generate a flow of air. By operating the air fan 54, air inside the drum 30 may flow and circulate through the air passage 51.

That is, in an embodiment of the present disclosure, the heater 50 dehumidifies and heats air flowing along the air passage 51 in communication with the inside of the drum 30 and supplies air back to the inside of the drum 30, thereby providing high-temperature dry air into the drum 30 and removing moisture contained in the laundry.

However, the heater 50 in FIG. 4 is only an example of the heater 50 for performing the drying course. In the present disclosure, a scheme or a type of the heater 50 for providing high-temperature air to the laundry is not necessarily limited as above.

For example, the heater 50 may be of an exhaust type that allows air from outside the cabinet 10 to be introduced and flow into the drum 30, and discharges air inside the drum 30 to the outside. Additionally, the heater 50 may also be of a static type that heats and dehumidifies air inside the drum 30 while not causing the flow of air.

In addition, the laundry treating apparatus 1 shown in FIG. 3 and the laundry treating apparatus 1 shown in FIG. 4 are shown separately for convenience of description, and it goes without saying that the respective components cannot coexist with each other.

For example, an embodiment of the present disclosure may include the water supplier 60, the tub 20, the detergent supplier 40, and the like to perform the washing course of the laundry, and at the same time, include the heater 50 of various types to perform the drying course of the laundry.

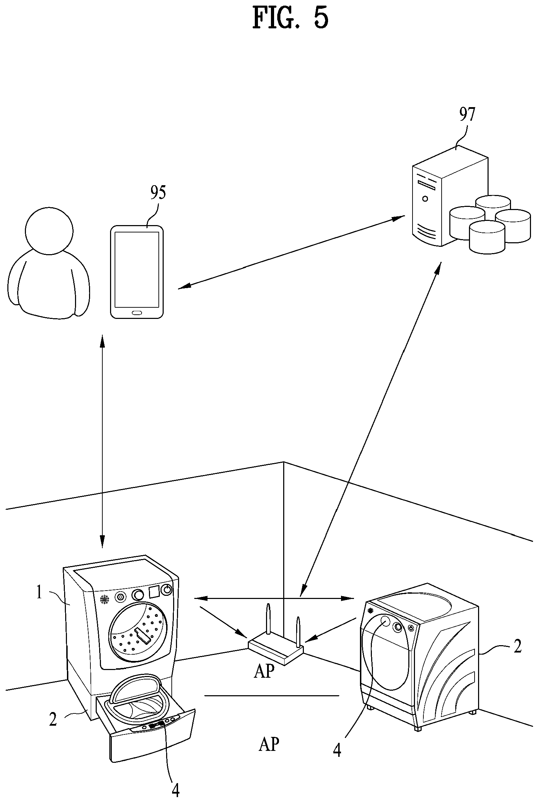

FIG. 5 schematically shows various communication environments that may be established by the laundry treating apparatus 1 according to an embodiment of the present disclosure.

Referring to FIG. 5, the laundry treating apparatus 1 according to an embodiment of the present disclosure may activate the pairing mode with the at least one external device 2. For example, the laundry treating apparatus 1 according to an embodiment of the present disclosure may activate the pairing mode via mutual communication with the external device 2 disposed outside the cabinet 10.

In other words, the controller 90 may activate the pairing mode via communication with the further controller 3 of the external device 2. The controller 90 may activate the pairing mode by exchanging information with the further controller 3 or a further communication unit of the external device 2 via the communication unit.

FIG. 5 shows a connection to the two external devices 2 according to an embodiment of the present disclosure, but the number of external devices 2 that may be connected to the laundry treating apparatus 1 according to an embodiment of the present disclosure may vary.

In an embodiment of the present disclosure, the external device 2 may perform an external treatment course to treat the laundry. For example, the external device 2 may include the drum 30 to accommodate the laundry therein. The external device 2 may be equipped with the further controller 3 for controlling various devices disposed in the external device 2, separately from the controller 90 of the laundry treating apparatus 1 according to an embodiment of the present disclosure.

In addition, the external device 2 may include a further output device 4 that outputs a screen to provide information related to an operation situation or a laundry treatment state controlled by the further controller 3.

The laundry treating apparatus 1 according to an embodiment of the present disclosure may perform the washing course of the laundry, and the external device 2 may perform the drying course of the laundry.

The opposite case may also be possible, and both the laundry treating apparatus 1 according to an embodiment of the present disclosure and the external device 2 may perform the laundry washing course or the drying course.

In an embodiment of the present disclosure, a communication scheme by which the controller 90 and the external device 2 exchange the information may vary. For example, controller 90 may be in direct communication with the further communication unit of the external device 2 via the communication unit in a scheme, such as Bluetooth.

In addition, the controller 90 or the communication unit may be equipped separately from the laundry treating apparatus 1 according to an embodiment of the present disclosure and the external device 2, and may exchange the information via an external communication medium 96 that provides signals for communication.

For example, the external communication medium 96 may generate a Wi-Fi signal, and the controller 90 may exchange the information with the external communication medium 96 based on the Wi-Fi signal. The further controller 3, which is disposed in the external device 2 and distinct from the controller 90 of the laundry treating apparatus 1 according to an embodiment of the present disclosure, may receive signals transmitted from the controller 90 via information exchange with the external communication medium 96.

When the controller 90 directly generates the signal as above and when the external communication medium 96 is used as the signal generation means, a collection path of the information transmitted externally from the controller 90 or the information received by the controller 90 may also vary.

For example, even when the controller 90 directly transmits or receives the signal, the controller 90 may directly transmit the signal to the further controller 3 of external device 2, or a scheme in which the signal is transmitted to an external server 97 and the further controller 3 receives the signal from the server 97 may be used.

Even when the controller 90 uses the external communication medium 96, the information transmitted from the controller 90 to the external communication medium 96 may be directly transmitted to the external device 2, or the information transmitted to the external communication medium 96 may be transmitted to the server 97 and then is the further controller 3 of the external device 2 may receive the information from the server 97.

In one example, a relationship between a sender and a receiver may be changed between the controller 90 disposed in the laundry treating apparatus 1 according to an embodiment of the present disclosure and the further controller 3 of the external device 2.

In one example, the laundry treating apparatus 1 according to an embodiment of the present disclosure may also be permitted to be in communication with the user's terminal 95 described above. For example, the controller 90 may provide information related to the current operating state to the user via the terminal 95, and a remote control mode controlled based on a command transmitted from the terminal 95 may be activated via the information exchange with the terminal 95.

A communication or information exchange scheme between the controller 90 and the terminal 95 may be the same as the communication or information exchange scheme between the controller 90 and the further controller 3 described above. For example, the controller 90 may exchange the information directly with the terminal 95, or may exchange the information via the external communication medium 96 and/or the server 97.

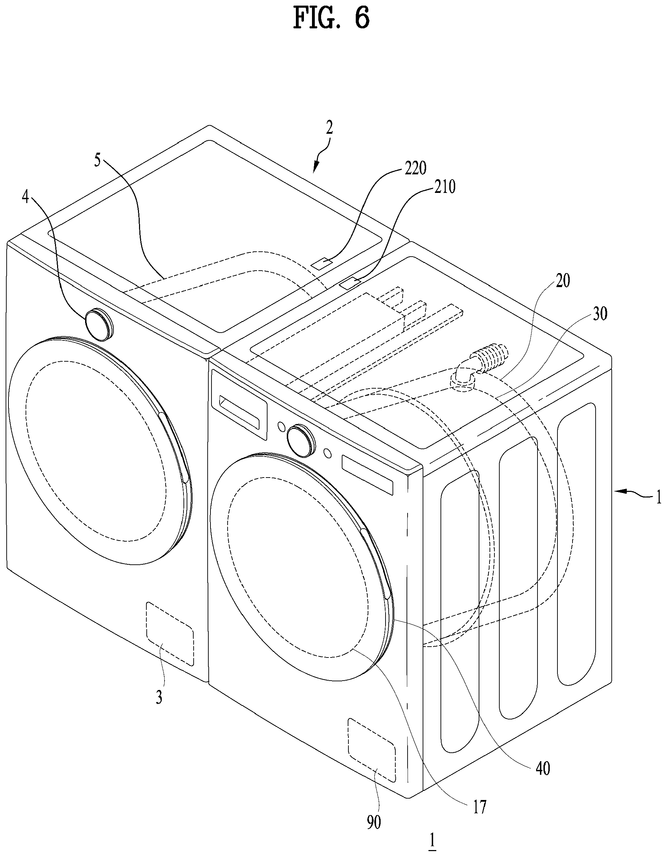

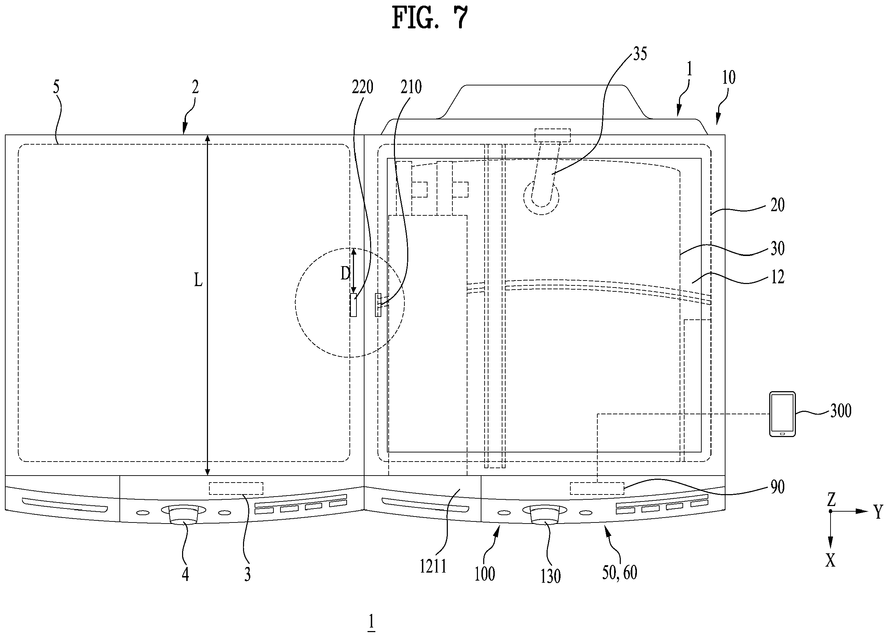

FIG. 6 shows the laundry treating apparatus 1 and the external device 2 disposed side by side in a lateral direction according to an embodiment of the present disclosure, and FIG. 7 is a top view of the laundry treating apparatus 1 and the external device 2 in FIG. 6.

Referring to FIGS. 6 and 7, the laundry treating apparatus 1 according to an embodiment of the present disclosure may include the cabinet 10 and the drum 30 as described above. The cabinet 10 may include one of a signal generator 210 and a signal detector 220, and the other may be disposed on the external device 2 located outside the cabinet 10. When the signal detector 220 detects a signal of the signal generator 210, the laundry treating apparatus 1 may be paired with the external device 2.

The signal generator 210 may generate various signals that may be detected by the signal detector 220. The signal detector 220 may be of various types that may detect the signal generated from the signal generator 210.

The signal generated from the signal generator 210 may be of various types. For example, the signal generator 210 may generate the various signals such as a Wi-Fi signal, a Bluetooth signal, a magnetic field signal, a sound signal, and a light signal, and the signals may be propagated by a predetermined distance from the signal generator 210.

The signal detector 220 may detect the signal of the signal generator 210, and the signal detector 220, which has detected the signal of the signal generator 210, may transmit whether the signal has been detected to the controller 90 and/or the further controller 3.

The laundry treating apparatus 1 according to an embodiment of the present disclosure may activate the pairing mode with the external device 2 only when the signal of the signal generator 210 is detected by the signal detector 220.

In an embodiment of the present disclosure, the laundry treating apparatus 1 may activate the pairing mode via information exchange with the external device 2 or the further controller 3 of the external device 2 using the communication unit or the like belonging to the controller 90.

In the present disclosure, the pairing mode refers to a mode in which the controller 90 and the further controller 3 are permitted to be in communication with each other and exchange signals and information necessary for operation via the mutual communication.

For example, the controller 90 may transmit information on the laundry that is currently being treated or scheduled to be treated, information on the treatment course, and the like to the external device 2, may receive the information on the laundry that is currently being treated or scheduled to be treated, the information on the treatment course, and the like from the external device 2, and may provide the information received from the external device 2 to the user or reflect the information in setting of the treatment course of the laundry.

In one example, the information exchange between the laundry treating apparatus 1 according to an embodiment of the present disclosure and the external device 2 may be performed via the communication unit belonging to the controller 90. However, when stability of the communication between the laundry treating apparatus 1 and the external device 2 is not secured, reliability and continuity of the information exchanged therebetween may be lacking, which may cause inconvenience in use or pose a safety problem.

For example, when the communication is continuously interrupted in an unspecified situation, the pairing mode between the laundry treating apparatus 1 and the external device 2 may lack effectiveness or operational stability.

That is, when the pairing mode between the laundry treating apparatus 1 and the external device 2 is activated, setting pairing conditions that ensure the stability of the communication for the information exchange may be advantageous in using the laundry treating apparatus 1 and the external device 2.

An embodiment of the present disclosure may effectively identify a situation in which the stability of the communication between the laundry treating apparatus 1 and the external device 2 may be ensured using the signal generator 210 and the signal detector 220.

Specifically, in an embodiment of the present disclosure, the signal generator 210 disposed on the cabinet 10 of the laundry treating apparatus 1 or the external device 2 may emit the signal that may be detected by the signal detector 220.

A distance at which the signal generated by the signal generator 210 may be detected may be physically determined, and the signal detector 220 may serve as a standard for limiting the distance at which the signal may be detected, as well as the situation at which the signal may be detected.

For example, in the situation in which the signal generated from the signal generator 210 may be detected by the signal detector 220, the stability of the communication between the laundry treating apparatus 1 and the external device 2 may be secured.

For example, a transmission distance of the signal generated by the signal generator 210 may be set smaller than a distance experimentally/statistically confirmed to enable stable communication between the communication unit of the laundry treating apparatus 1 and a further communication unit belonging to the further controller 3 of the external device 2.

In addition, even when the signal generator 210 and the signal detector 220 are located within the transmission distance, in a communication situation considering an obstacle or the like disposed therebetween, a signal detecting environment of the signal detector 220 may be more stringent than a communication available environment.

Accordingly, when the signal from the signal generator is detected by the signal detector 220, the stable communication between the laundry treating apparatus 1 and the external device 2 may be achieved and the pairing mode may be stably activated.

In an embodiment of the present disclosure, the signal detector 220 may detect the signal when being located within a predetermined distance from the signal generator 210. Accordingly, in an embodiment of the present disclosure, when the signal detector 220 detects the signal from the signal generator 210, the stability of the communication between the laundry treating apparatus 1 and the external device 2 may be secured in terms of distance conditions.

That is, at a distance at which the signal of the signal generator 210 is not detected by the signal detector 220, the communication between the controller 90 and the further controller 3 may be unstable or the communication may be strategically limited to ensure the communication stability.

FIGS. 6 and 7 show a state in which the laundry treating apparatus 1 according to an embodiment of the present disclosure and the external device 2 are in contact with each other as the state in which the signal detector 220 detects the signal of the signal generator 210.

However, in an embodiment of the present disclosure, the laundry treating apparatus 1 may not necessarily have to be in contact with the external device 2, and an allowable separation distance between the signal generator 210 and the signal detector 220 may be set variously depending on need.

In one example, in an embodiment of the present disclosure, the signal detector 220 may detect the signal while directly facing the signal generator 210. That is, in an embodiment of the present disclosure, as a higher criterion for securing the communication stability, the signal detector 220 may detect the signal when there is no pillar or other obstacle between the signal detector 220 and the signal generator 210.

In one example, in an embodiment of the present disclosure, one of the signal generator 210 and the signal detector 220 may be disposed on one surface of the cabinet 10, the other of the signal generator 210 and the signal detector 220 may be disposed on one surface of the external device 2, and when the one surface of the cabinet 10 is disposed to face the one surface of the external device 2, the signal detector 220 may detect the signal.

FIGS. 6 and 7 show the laundry treating apparatus 1 and the external device 2 being positioned such that respective side surfaces thereof face each other according to an embodiment of the present disclosure, such that the signal may be detected by the signal detector 220.

The arrangement conditions between the laundry treating apparatus 1 and the external device 2 as above may be set based on design positioning of the signal detector 220 and the signal generator 210, a signal propagation distance of the signal generator 210, and a detection ability of the signal detector 220.

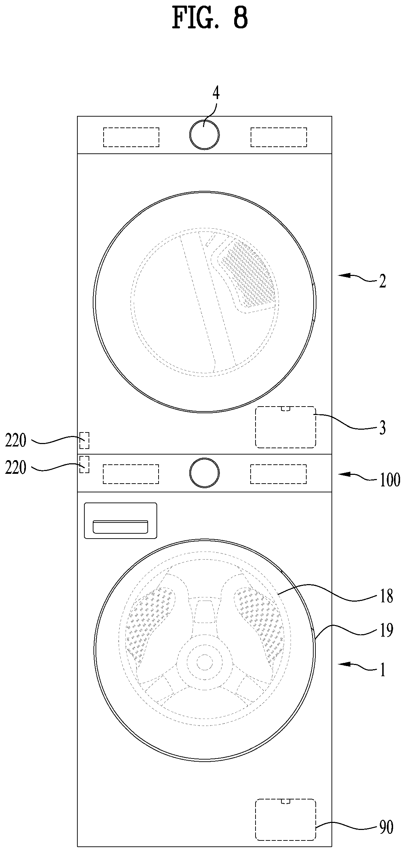

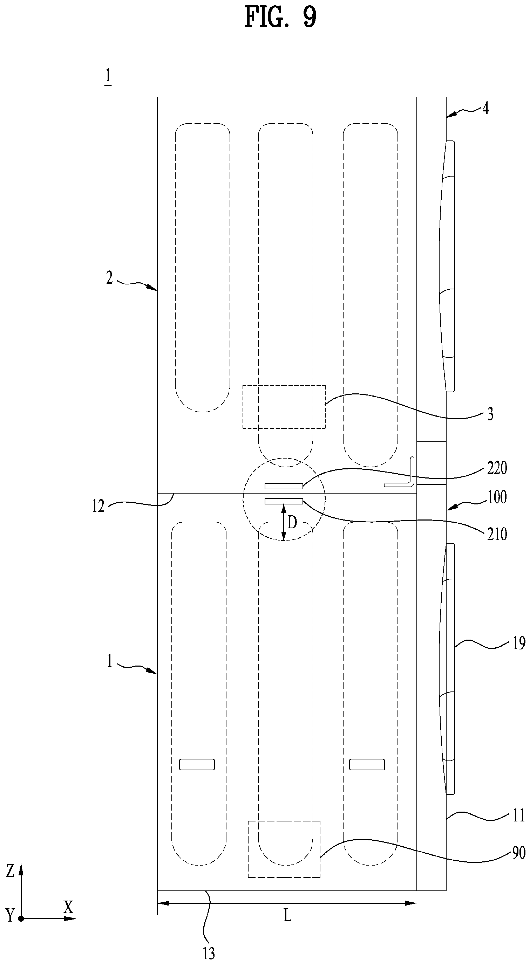

FIG. 8 shows the laundry treating apparatus 1 and the external device 2 stacked vertically on each other according to an embodiment of the present disclosure, and FIG. 9 is a side view of the laundry treating apparatus 1 and the external device 2 in FIG. 8.

Referring to FIGS. 8 and 9, in an embodiment of the present disclosure, one of the signal generator 210 and the signal detector 220 may be disposed on a top surface or a bottom surface of the cabinet 10, and when the cabinet 10 and the external device 2 are stacked vertically, the signal detector 220 may detect the signal.

The laundry treating apparatus 1 and the external device 2 may have something in common in that they are both devices for treating the laundry, and may be expected by design to be disposed adjacent to each other for ease of use. Furthermore, the laundry treating apparatus 1 and the external device 2 may be induced by design to be stacked together considering a utilization space thereof.

Considering the above arrangement structure, in an embodiment of the present disclosure, when the external device 2 is disposed on the laundry treating apparatus 1 and supported by the laundry treating apparatus 1, the signal detector 220 may detect the signal.

That is, in an embodiment of the present disclosure, one of the signal generator 210 and the signal detector 220 may be disposed on the top surface of the cabinet 10 and the other may be disposed on a bottom surface of the external device 2, so that the signal detector 220 may detect the signal while the external device 2 is seated on the laundry treating apparatus 1.

Additionally, in an embodiment of the present disclosure, when the laundry treating apparatus 1 is disposed on the external device 2 and supported by the external device 2, the signal detector 220 may detect the signal.

That is, in an embodiment of the present disclosure, one of the signal generator 210 and the signal detector 220 may be disposed on the top surface of the external device 2 and the other may be disposed on a bottom surface of the cabinet 10.

Accordingly, an embodiment of the present disclosure may provide the user with the laundry treating apparatus 1 that may be used with the external device 2, and further, may allow the pairing mode to be activated when the laundry treating apparatus 1 and the external device 2 are stacked in the vertical direction.

In one example, in an embodiment of the present disclosure, the signal detector 220 may detect the signal while being aligned vertically with the signal generator 210. That is, the signal detector 220 and the signal generator 210 may be provided such that the detection of the signal is available only when the laundry treating apparatus 1 and the external device 2 face each other vertically, as well as when at least a portion of the signal detector 220 overlaps the signal generator 210 in the vertical direction or is adjacent to the signal generator 210 by a preset distance.

Accordingly, an embodiment of the present disclosure may go beyond simply positioning the laundry treating apparatus 1 and the external device 2 stacked on top of each other, and set specific arrangement conditions, such as aligning respective front surfaces of the laundry treating apparatus 1 and the external device 2 with each other, thereby ensuring communication stability and promoting safe use of the devices.

In one example, in an embodiment of the present disclosure, one of the signal generator 210 and the signal detector 220 may be disposed on one side of the top surface or the bottom surface of the cabinet 10, and a signal transmission distance D of the signal generator 210 may be equal to or smaller than a half of a length L of the one side.

FIG. 9 shows a state in which the signal generator 210 is disposed on one of a pair of lateral sides defined on the top surface of the cabinet 10, and the signal detector 220 is disposed on one of a pair of lateral sides defined on the bottom surface of the external device 2 downwardly facing the signal generator 210, in an embodiment of the present disclosure.

In an embodiment of the present disclosure, the signal transmission distance D of the signal generator 210 or a signal detection distance of the signal detector 220 may be equal to or smaller than the half of the length L of the one side. However, the signal transmission distance D or the signal detection distance, as design conditions, may be varied as needed.

For example, the signal transmission distance D may be equal to or smaller than 25% of the length L of the one side, or may be limited to a specific value other than the ratio to the length L of the one side.

An embodiment of the present disclosure allows each of the signal generator 210 and the signal detector 220 to be located the on one side of each of the cabinet 10 and the external device 2, thereby ensuring the communication stability and effectively presenting the recommended arrangement structure of the laundry treating apparatus 1 and the external device 2 as required by design to the user.

In one example, the external device 2 includes the drum 30 that accommodates the laundry therein to perform the external treatment course of the laundry.

The treatment course of the laundry performed in the laundry treating apparatus 1 according to an embodiment of the present disclosure and the external treatment course of the laundry performed in the external device 2 are distinguished from each other only based on a subject performing the corresponding course, and characteristics of the courses being performed may be identical to each other.

For example, the laundry treating apparatus 1 according to an embodiment of the present disclosure may perform the plurality of treatment courses based on the input signal of the user and under control of the controller 90, and the plurality of treatment courses may include the washing course, rinsing course, the dehydration course, the drying course, and the like described above.

Additionally, the plurality of external treatment courses performed in the external device 2 may also include the washing course, the rinsing course, the dehydration course, the drying course, and the like. However, the plurality of external treatment courses do not necessarily coincide with the plurality of treatment courses.

For example, the laundry treating apparatus 1 according to an embodiment of the present disclosure may perform the washing course for washing the laundry, and the external device 2 may perform the drying course for drying the laundry.

The laundry treating apparatus 1 according to an embodiment of the present disclosure may activate the pairing mode with the external device 2 that may treat the laundry together in an associated manner, so that a system in which processes for treating the laundry are in association with each other in different devices may be provided to the user.

In one example, the signal generator 210 may generate a magnetic field as the signal. For example, the signal generator 210 may include a means for generating the magnetic field, such as a general magnet or an electromagnet.

The signal generator 210, which includes a magnetic field generator such as the magnet, may not consume power to generate the signal, and thus maintainability may be improved in maintaining the signal generator 210 and securing a communication environment using the signal detector 220.

In one example, the signal detector 220 may correspond to a reed switch that switches to a short circuit state in response to the signal. For example, the signal detector 220 may correspond to the reed switch that generates the signal as reeds separated from each other come into contact with each other when the signal is transmitted.

The reed switch may be constructed to respond to the magnetic field. For example, when the pair of reeds of the reed switch are located in the magnetic field in the state of being spaced apart from each other, the reeds may be transformed to be in contact with each other under influence of the magnetic field.

An embodiment of the present disclosure may use the signal generator 210 that generates the magnetic field and the signal detector 220 that physically reacts to the magnetic field, thereby improving a maintenance performance of the signal generator 210 and the signal detector 220 and effectively simplifying the configuration based on the signal detection.

In one example, in an embodiment of the present disclosure, the controller 90 may be disposed inside the cabinet 10 and may adjust the rotation of the drum 30 to perform the treatment course of the laundry. When the signal detector 220 detects the signal, the controller 90 may be allowed to be paired with the further controller 3 disposed in the external device 2.

As described above, the controller 90 may include the communication unit for the external communication, and the further controller 3 may also include a further communication unit with the same function. The controller 90 or the further controller 3 may allow the communication for the pairing mode only when there is a signal-detection signal from the signal detector.

In one example, the signal detector 220 may be disposed on the cabinet 10 and transmit whether the signal has been detected to the controller 90, and the controller 90 may inform the further controller 3 that the pairing is permitted when the signal detector 220 detects the signal.

In addition, contrary to the above, the signal detector 220 may be disposed on the bottom surface of the external device 2, the further controller 3 disposed in the external device 2 may directly receive the signal-detection signal from the signal detector 220, and the further controller 3 may inform the controller 90 of the laundry treating apparatus 1 according to an embodiment of the present disclosure that the detection signal has been received when the detection signal is transmitted thereto.

The controller 90 or the further controller 3 may inform the other party that the detection signal has been received via the communication between the communication unit and the further communication unit described above.

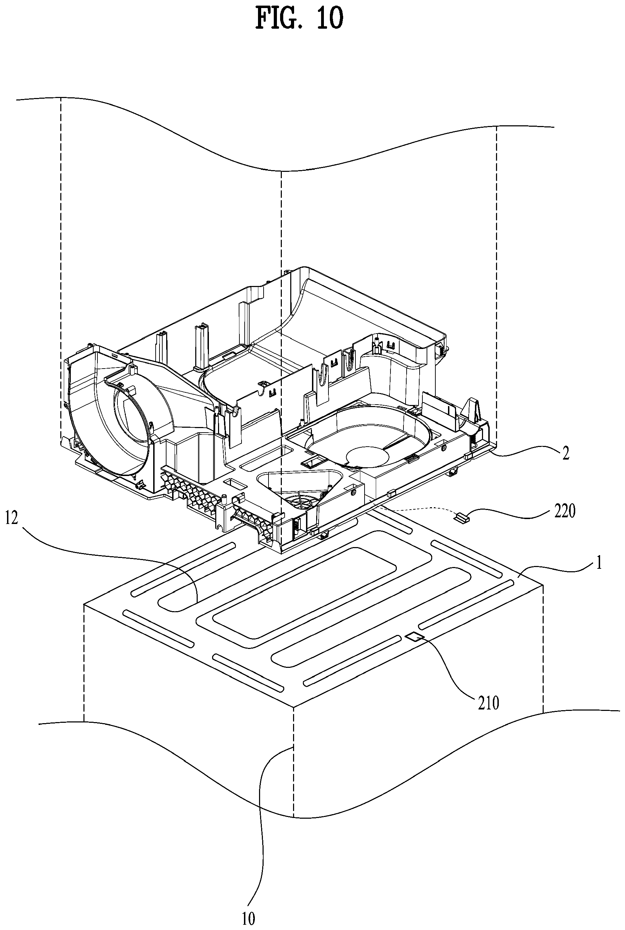

FIG. 10 is an exploded view of the top surface of the laundry treating apparatus 1 and the bottom surface of the external device 2, which are stacked in the vertical direction as shown in FIGS. 8 and 9. The laundry treating apparatus 1 may be a washing machine including the tub 20.

The external device 2 may be a dryer including the heater 50, and as shown in FIG. 10, the base 14 on which the heater 50 is disposed may be disposed on the bottom surface. However, the functions of the laundry treating apparatus 1 and the external device 2 may be reversed.

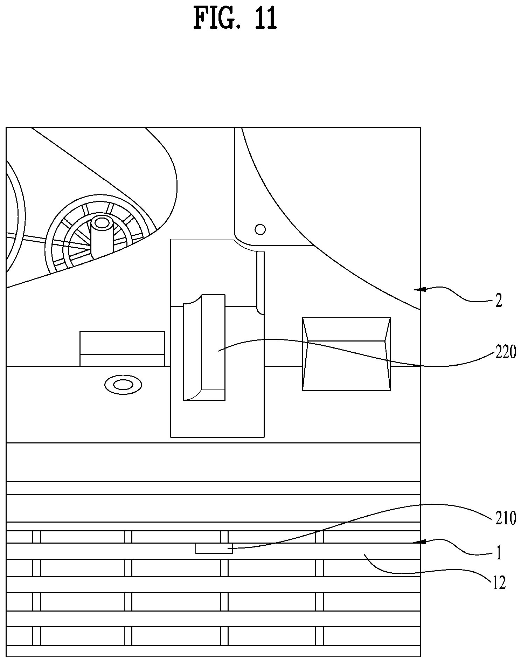

FIG. 11 shows the signal detector 220 disposed on the external device 2 in FIG. 10 and the signal generator 210 disposed on the cabinet 10 of the laundry treating apparatus 1 according to an embodiment of the present disclosure.

As shown in FIGS. 10 and 11, when the signal detector 220 is disposed on the external device 2, the further controller 3 disposed in the external device 2 may receive the detection signal of the signal detector 220 and inform the controller 90 that the detection signal has been received.

On the contrary, when the signal detector 220 is disposed on the cabinet 10, the controller 90 may receive the detection signal of the signal detector 220 and inform the further controller 3 of the external device 2 that the detection signal has been received.

Via the mutual information exchange as described above, the laundry treating apparatus 1 according to an embodiment of the present disclosure may identify whether the conditions of pairing with the external device 2 are met and activate the pairing mode.

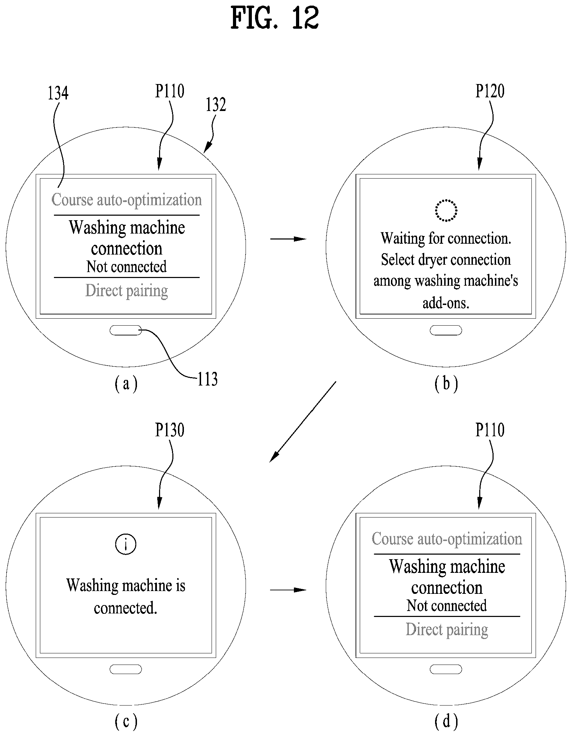

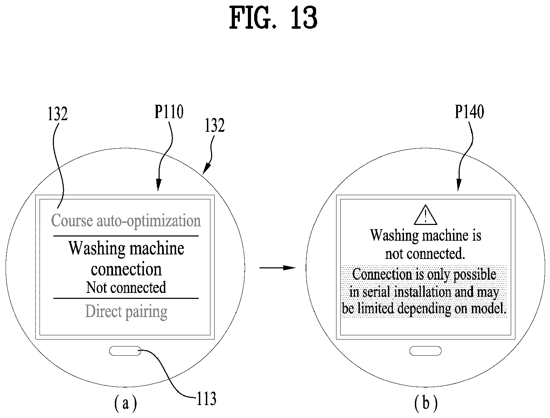

FIG. 12 shows output screens of the output device 130 about a pairing mode setting process in order according to an embodiment of the present disclosure, and FIG. 13 shows an output screen when the pairing mode fails in the pairing mode setting process.

Referring to FIG. 12, an embodiment of the present disclosure may include the input device 110 and the output device 130 described above, the input device 110 may be disposed on the cabinet 10, and an input signal to be transmitted to the controller 90 may be generated by the user.

The output device 130 may be disposed on the cabinet 10 and may output information to be transmitted to the user.

When the input signal requesting the pairing with the external device 2 is received via the input device 110, the controller 90 may perform the pairing with the further controller 3 when a current state corresponds to a pairing permitted state.

Specifically, (a) in FIG. 12 shows a pairing mode setting screen P110 output on the display 134 of the output device 130. The pairing mode setting screen P110 may be one of add-on setting screens that allow the user to change settings of various functions via the input device 110.

In other words, the pairing mode setting screen P110 may refer to a screen on which a pairing mode setting item is displayed among the add-on setting screens including a plurality of setting items. The user may command the pairing mode by manipulating display button 113 or the like on the pairing mode setting screen P110.

(b) in FIG. 12 shows the output device 130 outputting a pairing mode entry screen P120. When the command of requesting the pairing mode is input from the user, the controller 90 may attempt to enter the pairing mode with the external device 2, and the output device 130 may output the pairing mode entry screen P120 indicating that the pairing mode is being entered under the control of the controller 90.

(c) in FIG. 12 shows a pairing mode success screen P 130 notifying the user that the pairing mode has been successfully activated. When the pairing mode is successfully activated, the output device 130 may output the pairing mode success screen P130 notifying the user that the pair mode has been successfully activated under the control of the controller 90.

(d) in FIG. 12 shows the pairing mode setting screen P 110 output on the output device 130 after the pairing mode success screen P130 is output. When the pairing mode is activated, the pairing mode setting screen P110 may display that the pairing mode with the external device 2 is being activated.

In one example, the controller 90 may perform the pairing with the further controller 3 via direct communication between the devices. For example, the controller 90 may transmit a communication signal to be transmitted to the further controller 3 of the external device 2 via the communication unit, and the further controller 3 may exchange the information with the controller 90 while directly receiving the communication signal via the further communication unit.

An embodiment of the present disclosure activates the pairing mode with the external device 2 via the direct communication between the controller 90 and the further controller 3 without intervention of the server 97 and/or the external communication medium 96 as above, thereby performing the information exchange that is unrelated to states of the server 97 and/or the external communication medium 96 and is rapid.

In one example, in an embodiment of the present disclosure, the controller 90 may perform the pairing with the further controller 3 via communication in a Bluetooth scheme.

That is, in an embodiment of the present disclosure, the controller 90 may include a plurality of communication units having different communication schemes, or may include a communication unit that may perform the different communication schemes.

For example, in an embodiment of the present disclosure, the communication unit may perform the Bluetooth-based communication and Wi-Fi-based communication in parallel with each other in a separated manner. The communication scheme using the Bluetooth technology is suitable for relatively short distance communication, and is advantageous in terms of communication efficiency, such as communication stability and communication speed in a short distance.

Furthermore, Bluetooth Low Energy (BLE) is advantageous for a long-term communication relationship because the power consumed during the communication process is greatly reduced. In an embodiment of the present disclosure, the controller 90 directly exchanges the information with the further controller 3 via the Bluetooth, so that a stable and efficient communication relationship may be implemented.

FIG. 13 shows the screen output from the output device 130 when the pairing mode fails according to an embodiment of the present disclosure.

Referring to FIG. 13, an embodiment of the present disclosure may include the input device 110 and the output device 130 described above, and when the input signal for requesting the pairing with the external device 2 is received from the input device 110, the controller 90 may provide information guiding an installation location of the external device 2 to the user via the output device 130 when the signal is not detected by the signal detector 220.

Specifically, (a) in FIG. 13 shows the pairing mode setting screen P110 output via the output device 130 in an embodiment of the present disclosure. When the pairing mode request signal is input via the user's manipulation of the input device 110 on the pairing mode setting screen P 110, the output device 130 may output the pairing mode entry screen P 120 as shown in (b) in FIG. 12.

In one example, when the request signal for the pairing mode is input from the user on the pairing mode setting screen P110, the controller 90 may identify whether the arrangement conditions or the like of the pairing mode are met via the communication with the further controller 3.

In other words, when the signal detector 220 is disposed on the cabinet 10, the controller 90 may identify whether the signal-detection signal has been generated from the signal detector 220, and when the signal detector 220 is disposed on the external device 2, the controller 90 may make a request for whether the detection signal has been generated to the further controller 3.

When the detection signal of the signal detector 220 does not occur during the pairing mode entry process, the controller 90 may control the output device 130 to provide the user with a pairing mode failure screen P140 shown in (b) in FIG. 13.

That is, when conditions for entering the pairing mode are not met because the signal is not detected by the signal detector 220, the controller 90 may not activate the pairing mode and may output the pairing mode failure screen P140 via the output device 130.

In one example, the pairing mode failure screen P140 may display installation conditions for the pairing mode, that is, the arrangement conditions between the laundry treating apparatus 1 and the external device 2, or the like. When the signal generator 210 and the signal detector 220 are used to ensure the communication stability for the pairing mode, it is necessary to explain to the user the conditions for the signal detector 220 to detect the signal. Therefore, an embodiment of the present disclosure may provide the information guiding the installation location of the external device 2 on the pairing mode failure screen P140.

Although the present disclosure is shown and described in relation to the specific embodiment, it will be obvious to those skilled in the art that the present disclosure may be improved and changed in various ways without departing from the technical spirit of the present disclosure provided by the following patent claims.

## Claims

1. A laundry treating apparatus comprising:
a cabinet; and
a drum rotatably disposed inside the cabinet and configured to accommodate laundry therein,
wherein one of a signal generator and a signal detector is disposed on the cabinet, and the other is disposed on an external device located outside the cabinet,
wherein the laundry treating apparatus is paired with the external device only when the signal detector detects a signal from the signal generator.

2. The laundry treating apparatus of claim 1, wherein the signal detector detects the signal when located within a predetermined distance from the signal generator.

3. The laundry treating apparatus of claim 1, wherein the signal detector detects the signal while facing the signal generator.

4. The laundry treating apparatus of claim 1, wherein the one of the signal generator and the signal detector is disposed on one surface of the cabinet,
wherein the other of the signal generator and the signal detector is disposed on one surface of the external device,
wherein when the one surface of the cabinet is disposed to face the one surface of the external device, the signal detector detects the signal from the signal generator.

5. The laundry treating apparatus of claim 4, wherein the one of the signal generator and the signal detector is disposed on a top surface or a bottom surface of the cabinet,
wherein when the cabinet and the external device are stacked vertically, the signal detector detects the signal.

6. The laundry treating apparatus of claim 5, wherein the signal detector detects the signal while being aligned vertically with the signal generator.

7. The laundry treating apparatus of claim 5, wherein the one of the signal generator and the signal detector is disposed on one side of the top surface or the bottom surface of the cabinet,
wherein a signal transmission distance of the signal generator is equal to or smaller than a half of a length of the one side.

8. The laundry treating apparatus of claim 5, wherein the external device includes a drum configured to accommodate laundry therein to perform an external treatment course of the laundry.

9. The laundry treating apparatus of claim 1, wherein the signal generator generates a magnetic field as the signal.

10. The laundry treating apparatus of claim 9, wherein the signal detector includes a reed switch configured to switch to a short circuit state in response to the signal.

11. The laundry treating apparatus of claim 1, further comprising a controller disposed inside the cabinet and configured to adjust rotation of the drum to perform a treatment course of the laundry,
wherein the controller is permitted to be paired with a further controller disposed in the external device when the signal detector detects the signal.

12. The laundry treating apparatus of claim 11, wherein the signal detector is disposed on the cabinet and transmits whether the signal has been detected to the controller,
wherein the controller notifies the further controller that a current state is a pairing permitted state when the signal detector detects the signal.

13. The laundry treating apparatus of claim 11, further comprising:
an input device disposed in the cabinet and configured to generate an input signal to be transmitted to the controller by a user; and
an output device disposed in the cabinet and configured to output information to be transmitted to the user,
wherein when the input signal requesting pairing with the external device is received via the input device, the controller performs the pairing with the further controller when a current state corresponds to a pairing permitted state.

14. The laundry treating apparatus of claim 13, wherein the controller performs the pairing via inter-device direct communication with the further controller.

15. The laundry treating apparatus of claim 14, wherein the controller performs the paring by being in communication with the further controller in a Bluetooth scheme.

16. The laundry treating apparatus of claim 13, further comprising:
the input device disposed in the cabinet and configured to generate the input signal to be transmitted to the controller by the user; and
the output device disposed in the cabinet and configured to output the information to be transmitted to the user,
wherein when the input signal requesting the pairing with the external device is received from the input device, the controller provides information guiding an installation location of the external device to the user via the output device when the signal is not detected by the signal detector.
